# EUROPEAN PATENT APPLICATION

(11) **EP 4 116 509 A1**
(43) Date of publication of application: **11.01.2023**
(21) Application number: 22183682.8
(22) Date of filing: 07.07.2022
(51) Int. Cl.: E03C 1/02

(54) **PRE-EMBEDDED CONCEALED WATERWAY CONTROL BOX**

(30) Priority: 08.07.2021 CN 202110775054
(71) Applicant: Zhangzhou Solex Smart Home Co., Ltd., Changtai County Zhangzhou City, Fujian Province 363900 (CN)
(72) Inventor: LIN, Fangqi, Zhangzhou City, 363900 (CN); CHEN, Wenxing, Zhangzhou City, 363900 (CN); HU, Lihong, Zhangzhou City, 363900 (CN)
(74) Representative: Verscht, Thomas Kurt Albert

(57) **Abstract**

The present disclosure provides a pre-embedded concealed waterway control box, it comprises a main body, a sealing ring and a housing; the housing is fixedly connected to a side of the main body facing an outer side of a wall by the sealing ring, and the main body, the sealing ring and the housing are disposed in a pre-embedded chamber on the wall. The main body comprises a first sealing surface for installing a temperature control valve and a second sealing surface for installing an on-off valve assembly; the first sealing surface and the second sealing surface are disposed on different planes, and the first sealing surface is disposed on a side of the second sealing surface adjacent to the outer side of the wall along a thickness direction of the main body. The present disclosure provides the pre-embedded concealed waterway control box, an overall height of an on-off valve after an installation can be effectively reduced to achieve a shallower pre-embedded depth and a lower protruding height, so that the product is more beautiful.

## Description

### FIELD OF THE DISCLOSURE

The present disclosure relates to a water outlet device, and in particular relates to a waterway control box.

### BACKGROUND OF THE DISCLOSURE

1. The current concealed showers with push on-off controllers on the market generally have a higher pre-embedded depth and need to be matched with a thicker wall. An installation is not labor-saving, and a push control part protruding out of an outer wall is higher to affect an appearance.
2. The concealed showers with on-off valve cores being horizontally disposed can reduce a pre-embedded depth and a protruding height, however, difficulties for fixing the on-off valve cores arise.

### BRIEF SUMMARY OF THE DISCLOSURE

The main technical problem of the present disclosure to be solved is to provide a pre-embedded concealed waterway control box, an overall height of an on-off valve after an installation can be effectively reduced to achieve a shallower pre-embedded depth and a lower protruding height, so that the product is more beautiful.

In order to solve the technical problems, the present disclosure provides a pre-embedded concealed waterway control box, characterized in that: it comprises a main body, a sealing ring and a housing; the housing is fixedly connected to a side of the main body facing an outer side of a wall by the sealing ring, and the main body, the sealing ring and the housing are disposed in a pre-embedded chamber on the wall.

The main body comprises a first sealing surface for installing a temperature control valve and a second sealing surface for installing an on-off valve assembly; the first sealing surface and the second sealing surface are disposed on different planes, and the first sealing surface is disposed on a side of the second sealing surface adjacent to the outer side of the wall along a thickness direction of the main body.

In a preferred embodiment of the present disclosure, the first sealing surface is a side surface of the main body facing the outer side of the wall; a sinking platform is disposed on the side surface of the main body facing the outer side of the wall along the thickness direction of the main body, and the sinking platform defines the second sealing surface.

In a preferred embodiment of the present disclosure, the main body comprises a mounting hole for the temperature control valve in the first sealing surface, and an outer side of the mounting hole of the temperature control valve comprises a first water outlet hole and a second water outlet hole along a radial direction to connect to a cold water inlet hole and a hot water inlet hole of the temperature control valve.

The first water outlet hole and the second water outlet hole are respectively in communication with a first water inlet passage and a second water inlet passage in the main body.

In a preferred embodiment of the present disclosure, the first water outlet hole and the second water outlet hole are rotationally symmetrically arranged about a center of the mounting hole for the temperature control valve.

When water pipes in the wall are hot on a left side and cold on a right side, the first water inlet passage is connected to a cold water inlet pipe, the first water outlet hole is connected to the cold water inlet hole of the temperature control valve, the second water inlet passage is connected to a hot water inlet pipe, the second water outlet hole is connected to the hot water inlet hole of the temperature control valve.

When the water pipes in the wall are cold on the left side and hot on the right side, the first water inlet passage is connected to the hot water inlet pipe, the first water outlet hole is connected to the hot water inlet hole of the temperature control valve, the second water inlet passage is connected to the cold water inlet pipe, and the second water outlet hole is connected to the cold water inlet hole of the temperature control valve.

In a preferred embodiment of the present disclosure, the temperature control valve comprises a mixed water outlet, the cold water inlet hole and the hot water inlet hole; the temperature control valve comprises the mixed water outlet partially disposed in the mounting hole for the temperature control valve and is hermetically sealed to a side wall of the mounting hole for the temperature control valve by a sealing ring on the side wall.

The cold water inlet hole and the hot water inlet hole are rotationally symmetrically arranged about an axial direction of the mixed water outlet; the mounting hole for the temperature control valve comprises a mixed water passage in communication with the mixed water outlet; and the sinking platform comprises a mixed water inlet in communication with the mixed water passage.

In a preferred embodiment of the present disclosure, the on-off valve assembly comprises at least one on-off valve.

When there are at least two on-off valves, the at least two on-off valves are connected in series by an interconnecting cavity, and the interconnecting cavity is in communication with the mixed water outlet; and water outlets of the on-off valves each are respectively in communication with various water outlet joints.

In a preferred embodiment of the present disclosure, the on-off valves are push on-off valves, and the on-off valves are disposed along a depth direction of the pre-embedded chamber.

In a preferred embodiment of the present disclosure, the main body comprises a mounting hole for the on-off valves corresponding to the on-off valves, and the sinking platform is disposed in the mounting hole for the on-off valves.

In a preferred embodiment of the present disclosure, the main body comprises the water outlet joints corresponding to the on-off valves one-to-one.

In a preferred embodiment of the present disclosure, the housing extends outward to define a blocking edge along the depth direction of the pre-embedded chamber; and the blocking edge is used to guide residual water in the housing to the outer side of the wall..

Compared with the existing techniques, the technical solution has the following advantages.
1. The present disclosure provides a pre-embedded concealed waterway control box, a sinking platform is disposed on the main body, so that a sealing surface of an on-off valve moves downward from a surface of a main body to a sinking platform. Therefore, a height of the on-off valve after installation is reduced, and a pre-embedded depth of the waterway control box is also reduced. Concealed installation of the waterway control box on a thinner wall is performed in convenience for the users.
2. The present disclosure provides the pre-embedded concealed waterway control box, a mixed water outlet of a temperature control valve is partially disposed in a mounting hole of the main body for the temperature control valve. Therefore, a height of the temperature control valve after installation is also reduced. In this way, heights of parts of the temperature control valve and the on-off valve exposed out of a wall is lower, which is more beautiful. Advantages of the concealed installation is highlighted.
3. The present disclosure provides the pre-embedded concealed waterway control box, and a first water outlet (i.e., a first water outlet hole) and a second water outlet (i.e., a second water outlet hole) of the main body are rotationally symmetrically disposed. Regardless of whether water inlets in the user's home is cold on a left side and hot on a right side or hot on the left side and cold on the right side, the temperature control valve can be installed in both conditions. Only water outlets connected to a cold water inlet (i.e., a cold water inlet hole) and a hot water inlet (i.e., a hot water inlet hole) of the temperature control valve need to be exchanged. In this way, a restriction for the installation of the waterway control box becomes less, and selection standard is further lowered for the users.

### BRIEF DESCRIPTION OF THE DRAWINGS

Fig. 1 illustrates a perspective view of a shower of a preferred embodiment of the present disclosure;
Fig. 2 illustrates an exploded view of the shower of the preferred embodiment of the present disclosure;
Fig. 3 illustrates an exploded view of a waterway control box of the preferred embodiment of the present disclosure;
Fig. 4 illustrates a front view of a main body of the waterway control box of the preferred embodiment of the present disclosure;
Fig. 5 illustrates a cross-sectional view taken along a direction A-A in Fig. 4;
Fig. 6 illustrates a cross-sectional view taken along a direction B-B in Fig. 4;
Fig. 7 illustrates a cross-sectional view of an installation of a temperature control valve and an on-off valve assembly on the waterway control box of the preferred embodiment of the present disclosure;
Fig. 8 illustrates a front view of the waterway control box of the preferred embodiment of the present disclosure;
Fig. 9 illustrates a sectional view of an installation of the waterway control box of the preferred embodiment of the present disclosure;
Fig. 10 illustrates a perspective view of the temperature control valve of the preferred embodiment of the present disclosure;
Fig. 11 illustrates a cross-sectional view of the temperature control valve of the preferred embodiment of the present disclosure;
Fig. 12 illustrates a view of an installation of the temperature control valve of the preferred embodiment of the present disclosure when a left side is hot, and a right side is cold;
Fig. 13 illustrates a view of the installation of the temperature control valve of the preferred embodiment of the present disclosure when the left side is cold, and the right side is hot;
Fig. 14 illustrates a perspective view of the on-off valve of the preferred embodiment of the present disclosure;
Fig. 15 illustrates a cross-sectional view of the on-off valve of the preferred embodiment of the present disclosure;
Fig. 16 illustrates a view of an installation of the on-off valve of the preferred embodiment of the present disclosure;
Fig. 17 illustrates a sectional view of the installation of the on-off valve of the preferred embodiment of the present disclosure.

### DETAILED DESCRIPTION OF THE EMBODIMENTS

The technical solutions of embodiments of the present disclosure will be clearly and completely described below in combination with the accompanying drawings and embodiments of the present disclosure. It is obvious that the described embodiments are only some embodiments of the present disclosure and are not all embodiments, and the present disclosure covers all other embodiments provided they are made without creative works by those having ordinary skill in the art based on the embodiments of the present disclosure.

In the description of the present disclosure, it should be noted that the terms "upper", "lower", "inner", "outer", "top/bottom", etc. indicate an orientation or a positional relationship based on the orientation or the positional relationship shown in the drawings and are only for convenience for describing the present disclosure and simplifying the description, rather than indicating or implying that the pointed device or the pointed element must have a specific orientation or be constructed and operated in the specific orientation, and therefore should not be understood as a limitation of the present disclosure. In addition, the terms "first" and "second" are only used for descriptive purposes and should not be understood as indicating or implying relative importance.

In the description of the present disclosure, unless otherwise definitely described and limited, it should be noted that the terms "installed", "disposed with", "socketed/sleeved", "connected", etc., should be broadly understood, such as "connection" can be a wall-mounted connection, a detachable connection, or an integral connection, a mechanical connection, an electrical connection, a direct connection, an indirect connection through an intermediate medium, and a connection between two components. For those of ordinary skill in the art, the specific meaning of the above-mentioned terms in the present disclosure can be understood under specific conditions.

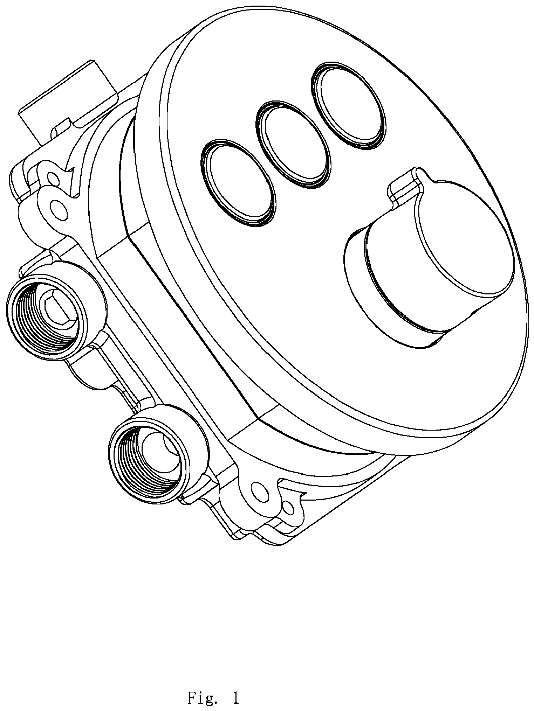

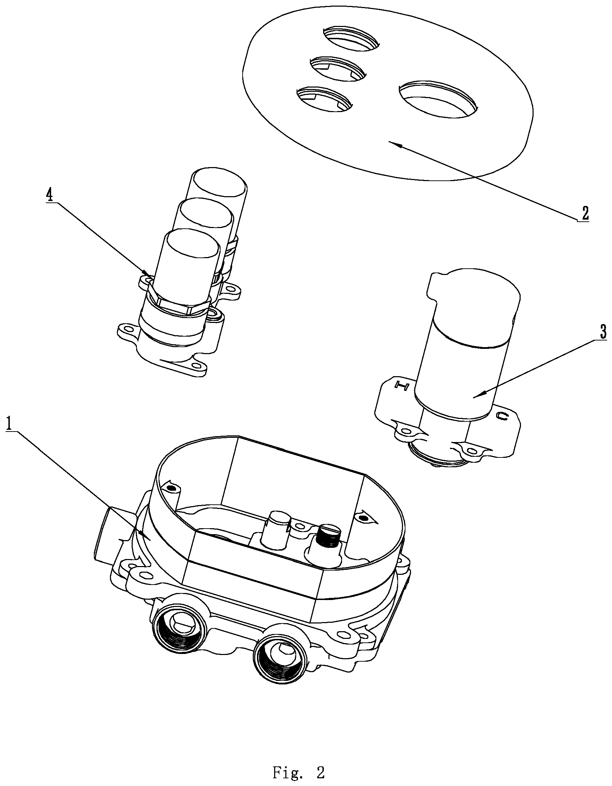

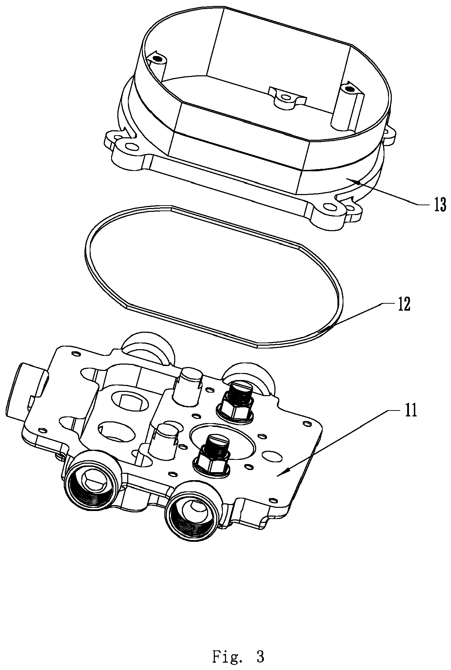

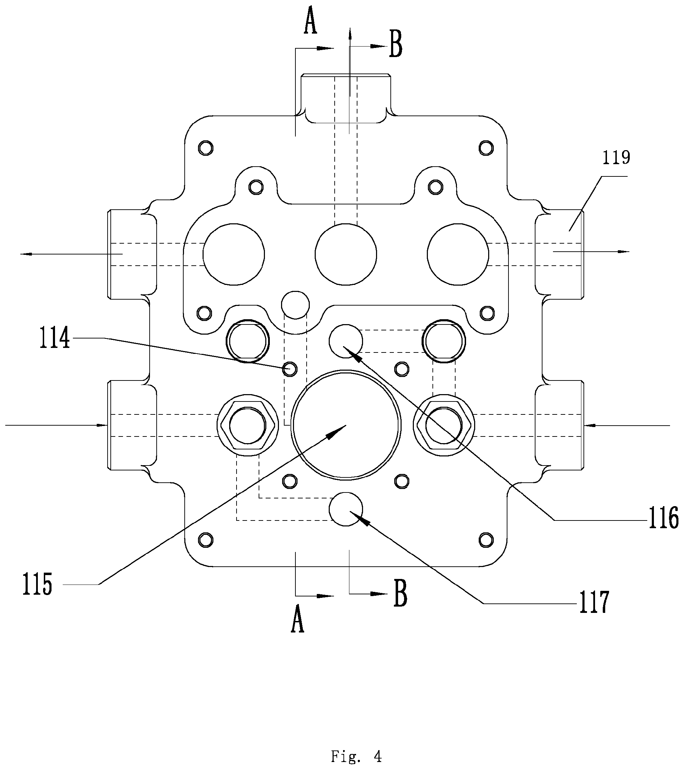

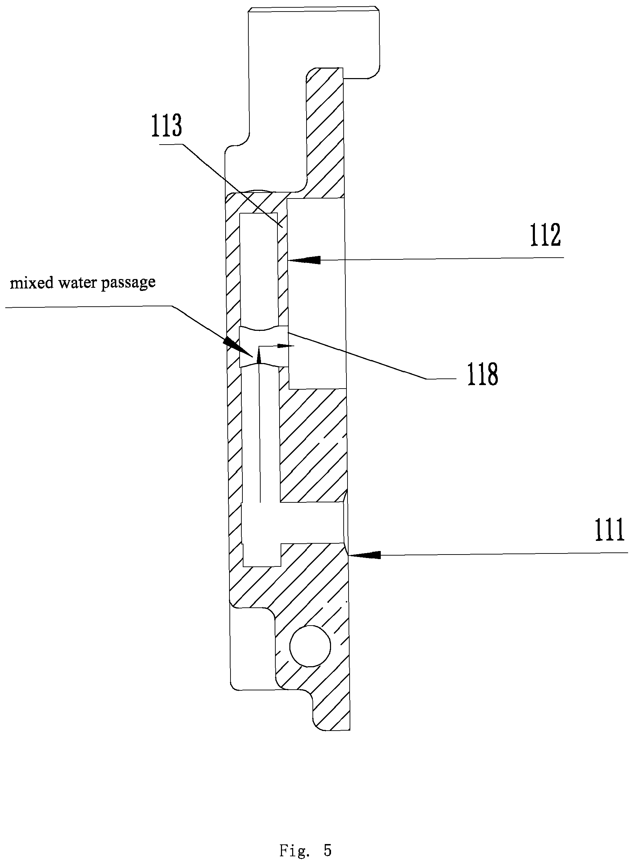

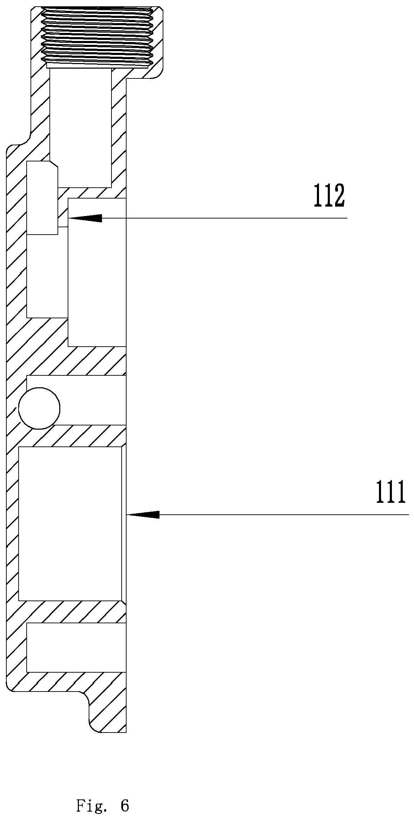

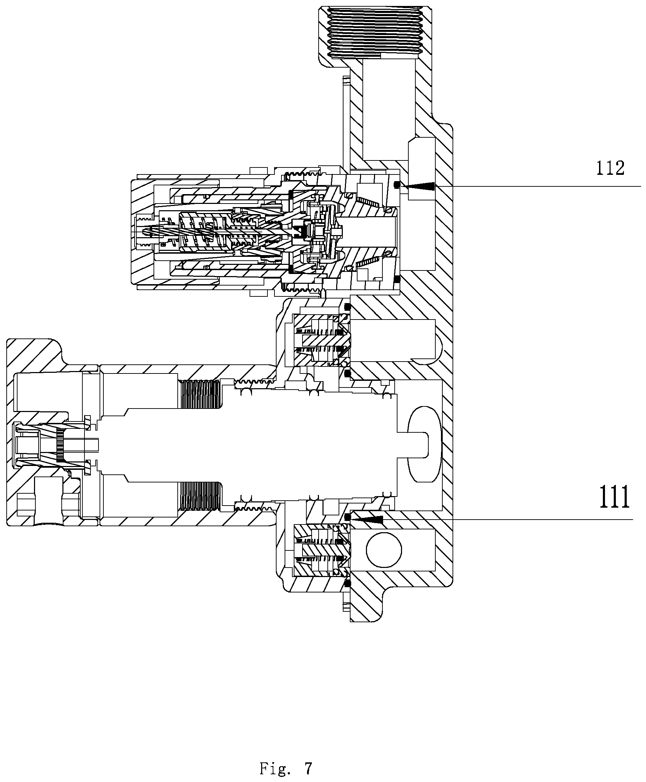

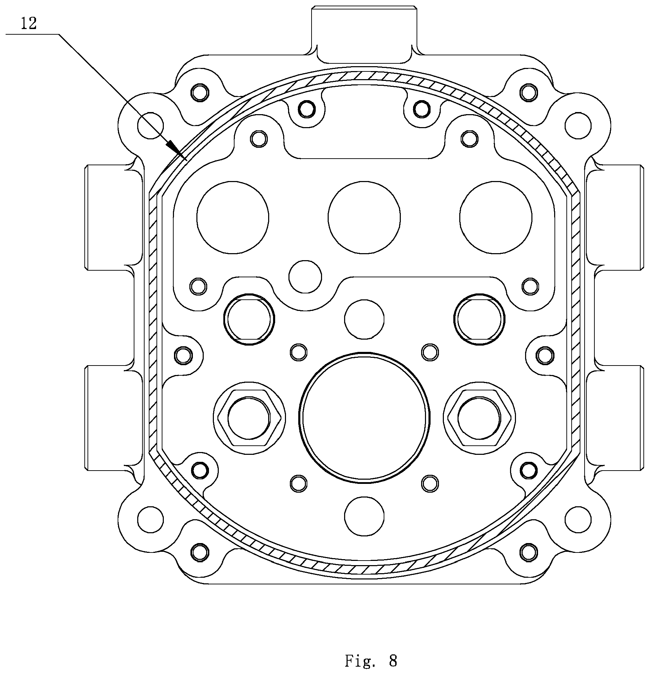

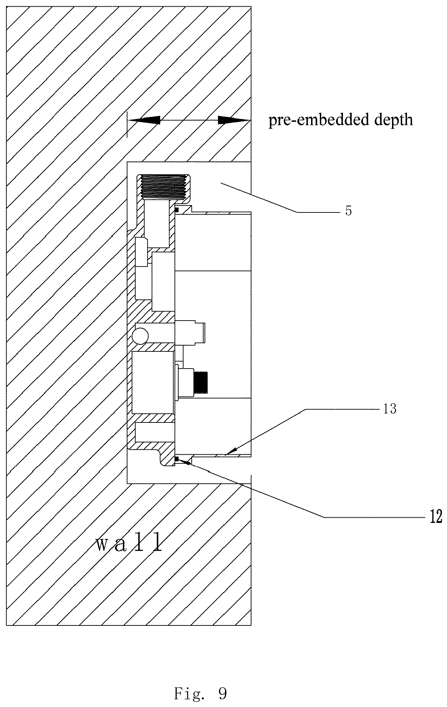

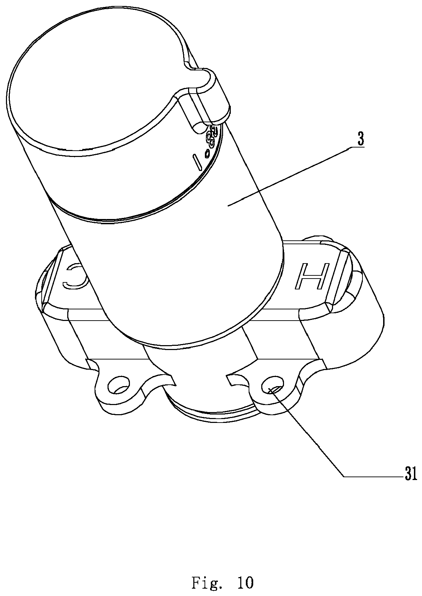

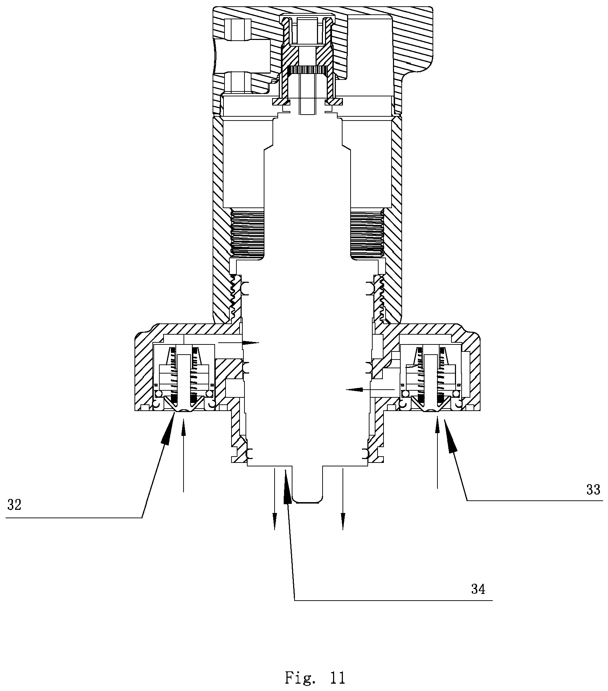

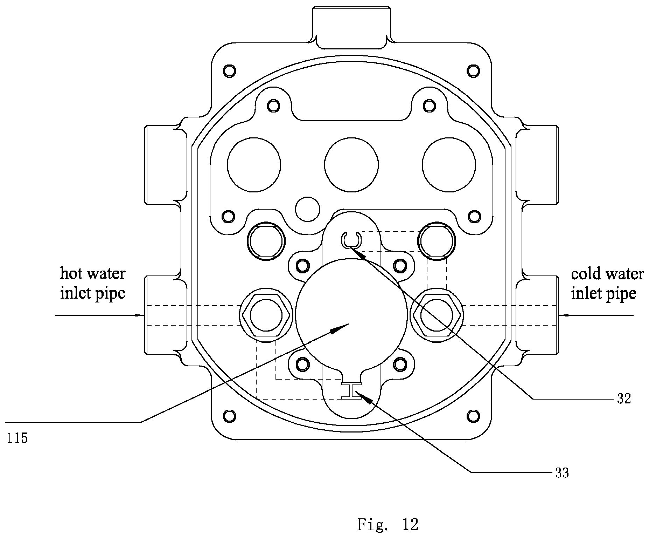

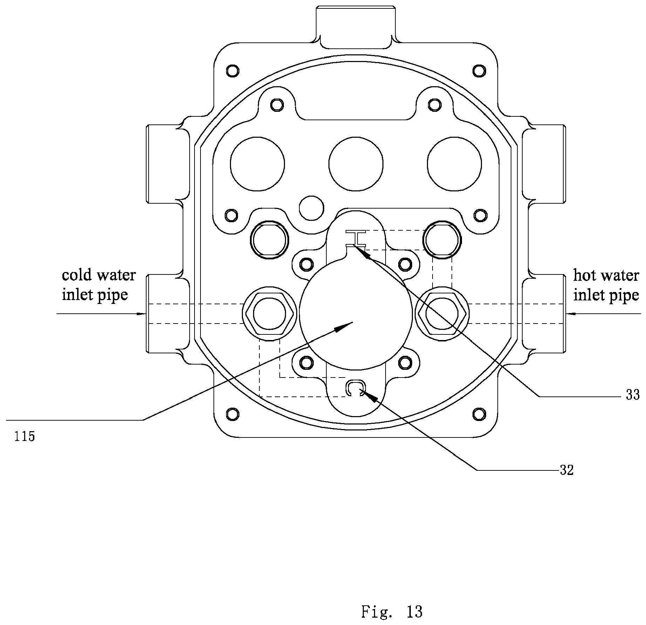

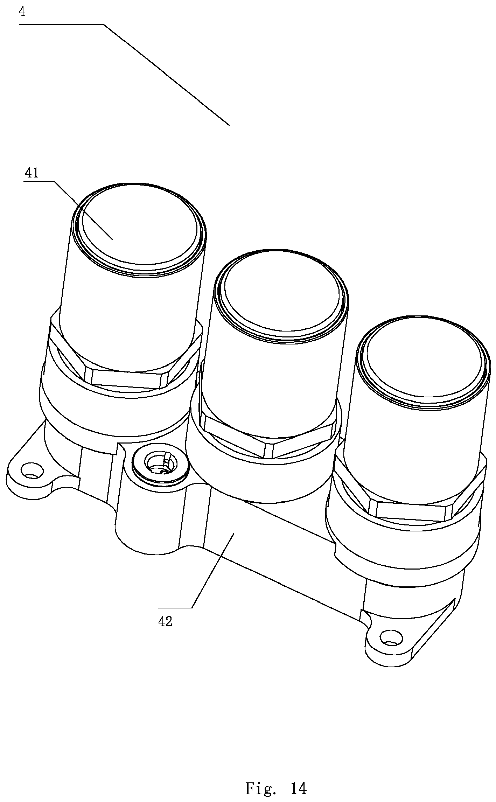

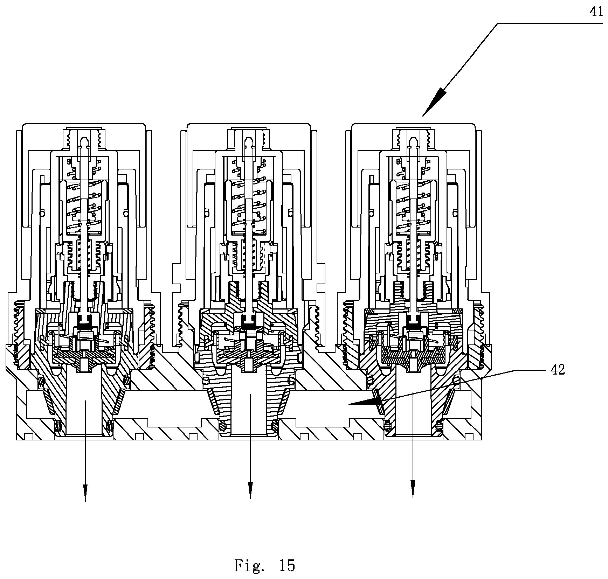

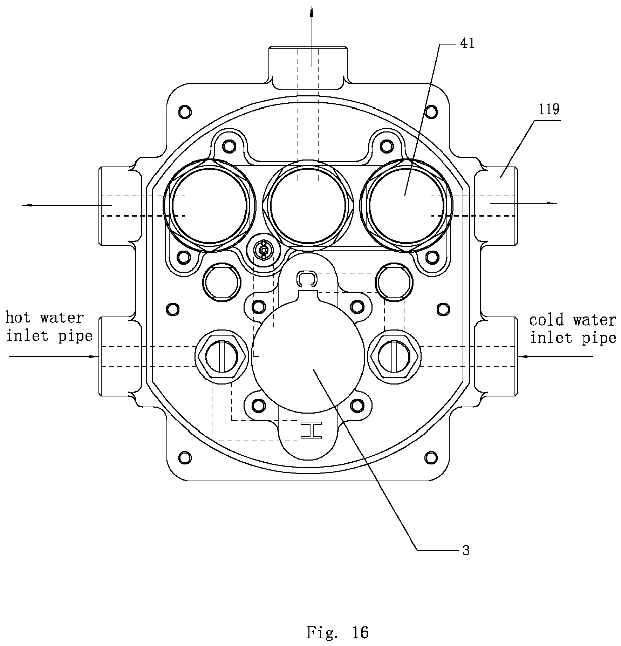

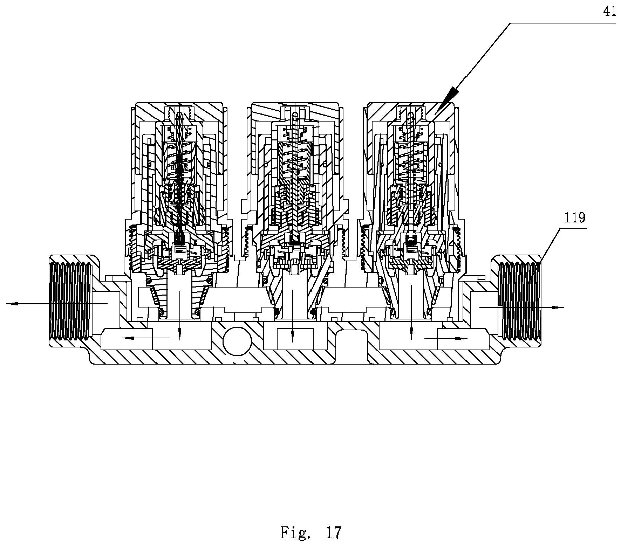

Referring to Figs. 1 to 17, this embodiment provides a pre-embedded concealed shower, it comprises a waterway control box 1, a surface cover 2, a temperature control valve 3 and an on-off valve assembly 4.

Wherein the waterway control box 1 further comprises a main body 11, a sealing ring 12 and a housing 13; the housing 13 is fixedly connected to a side of the main body 11 facing an outer side of a wall by the sealing ring 12, and the main body 11, the sealing ring 12 and the housing 13 are disposed in a pre-embedded cavity 5 on the wall.

The main body 11 comprises a first sealing surface 111 for installing the temperature control valve 3 and a second sealing surface 112 for installing the on-off valve assembly 4; the first sealing surface 111 and the second sealing surface 112 are disposed on different planes, and the first sealing surface 111 is disposed on a side of the second sealing surface 112 adjacent to the outer side of the wall along a thickness direction of the main body 11.

In this embodiment, the first sealing surface 111 is a side surface of the main body 11 facing the outer side of the wall; a sinking platform 113 is disposed on the side surface of the main body 11 facing the outer side of the wall along the thickness direction of the main body 11. The sinking platform 113 defines the second sealing surface 112.

With respect to the aforementioned pre-embedded concealed waterway control box 1, as the sinking platform 113 is disposed on the main body 11, a sealing surface of the on-off valve assembly 4 moves downward from a surface of the main body 11 to the sinking platform 113. Therefore, a height of the on-off valve after installation is lowered, so that a pre-embedment of the waterway control box 1 is achieved without the pre-embedded chamber 5 on the wall being too deep, and a pre-embedded depth of the waterway control box 1 is reduced. A concealed installation of the waterway control box 1 on a thinner wall can be achieved in convenience by the users. The second sealing surface 112 of the on-off valve assembly 4 moving downward, rather than the first sealing surface 111 of the temperature control valve 3 moving downward, that is, a height of the on-off valve assembly 4 itself is higher than the temperature control valve 3. Therefore, reducing an installation height of the temperature control valve 3 is meaningless. Only when an installation height of a switching valve (i.e., the on-off valve assembly 4) is reduced, an overall height of the waterway control box 1 is reduced, and a depth of the pre-embedded chamber 5 is reduced.

In this embodiment, in order to install the temperature control valve 3, the first sealing surface 111 comprises four screw holes 114, and the temperature control valve 3 also comprises holes 31 corresponding to the screw holes 114 one-to-one. Screws are connected to the screw holes 114 by passing through the holes 31, so that the temperature control valve 3 can be installed on the first sealing surface 111.

In addition, the main body 11 comprises a mounting hole 115 for the temperature control valve in the first sealing surface 111, and an outer side of the mounting hole 115 for the temperature control valve comprises a first water outlet hole 116 and a second water outlet hole 117 along a radial direction to connect to a cold water inlet hole 32 and a hot water inlet hole 33 of the temperature control valve 3; the first water outlet hole 116 and the second water outlet hole 117 are respectively in communication with a first water inlet passage and a second water inlet passage in the main body 11.

The temperature control valve 3 comprises a mixed water outlet 34, the cold water inlet hole 32 and the hot water inlet hole 33; the temperature control valve 3 comprises the mixed water outlet 34 partially disposed in the mounting hole 115 for the temperature control valve and is hermetically sealed to a side wall of the mounting hole 115 for the temperature control valve by a sealing ring on the side wall.

The cold water inlet hole 32 and the hot water inlet hole 33 are rotationally symmetrically arranged about an axial direction of the mixed water outlet 34; the mounting hole 115 for the temperature control valve comprises a mixed water passage in communication with the mixed water outlet 34; The sinking platform 113 comprises a mixed water inlet 118 in communication with the mixed water passage.

A height of the temperature control valve 3 after installation is also reduced due to the mixed water outlet 34 of the temperature control valve 3 partially disposed in the mounting hole 115 of the main body 11 for the temperature control valve, so that heights of the temperature control valve 3 and the on-off valve assembly (e.g., an on-off valve) exposed out of the wall are both lower and more beautiful. Advantages of the concealed installation is highlighted.

In this embodiment, the first water outlet hole 116 and the second water outlet hole 117 are rotationally symmetrically arranged about a center of the mounting hole 115 for the temperature control valve.

In this way, when water pipes in the wall are hot on a left side and cold on a right side, the first water passage is connected to a cold water inlet pipe, the first water outlet hole 116 is connected to the cold water inlet hole 32 of the temperature control valve 3, the second water inlet passage is connected to a hot water inlet pipe, and the second water outlet hole 117 is connected to the hot water inlet hole 33 of the temperature control valve 3.

When the water pipes in the wall is cold on the left side and hot on the right side, the first water inlet passage is connected to the hot water inlet pipe, the first water outlet hole 116 is connected to the hot water inlet hole 33 of the temperature control valve 3, the second water inlet passage is connected to the cold water inlet pipe, and the second water outlet hole 117 is connected to the cold water inlet hole 32 of the temperature control valve 3.

Therefore, the temperature control valve 3 can be installed regardless of whether water inlets in the user's home are cold on the left side and hot on the right side or hot on the left side and cold on the right side, only water outlets connected to a cold water inlet and a hot water inlet of the temperature control valve 3 need to be exchanged. In this way, a restriction for the installation of the waterway control box 1 becomes less, and selection standard is further lowered for the users.

In addition, the on-off valve assembly 4 comprises at least one on-off valve 41; the number of on-off valves 41 relates to the number of water outlet joints 119 of the main body 11, the number of on-off valves 41 required is based on the number of the water outlet joints 119. In this embodiment, there are three water outlet joints 119, so the number of on-off valves 41 is also three.

The three on-off valves 41 are connected in series by an interconnecting cavity 42, the interconnecting cavity 42 is in communication with the mixed water outlet 34; water outlets of the on-off valves 41 each are respectively in communication with the various water outlet joints 119.

In this embodiment, the on-off valves 41 are push on-off valves 41, and the on-off valves 41 are disposed along a depth direction of the pre-embedded chamber 5. Therefore, the on-off valves 41 are prevented from fixing difficulties after the on-off valves 41 are disposed horizontally, although a height of the on-off valves 41 is reduced. In this embodiment, when the on-off valves 41 need to be fixed, as an installation direction of the on-off valves 41 is along the depth direction of the pre-embedded chamber 5, the on-off valves 41 can be directly removed for replacement or fix in convenience when only the surface cover 2 is detached.

In order to install the on-off valves 41, the main body 11 comprises a mounting hole for the on-off valves corresponding to the on-off valves 41, and the sinking platform 113 is disposed in the mounting hole for the on-off valves.

In addition, in order to prevent residual water from entering into the wall to cause wall bulging or being mildewed during the shower is used, the housing 13 extends outward to define a blocking edge 131 along the depth direction of the pre-embedded chamber 5; and the blocking edge is used to guide the residual water in the housing 13 to the outer side of the wall.

The invention may be summarized as follows: The present disclosure provides a pre-embedded concealed waterway control box, it comprises a main body, a sealing ring and a housing; the housing is fixedly connected to a side of the main body facing an outer side of a wall by the sealing ring, and the main body, the sealing ring and the housing are disposed in a pre-embedded chamber on the wall. The main body comprises a first sealing surface for installing a temperature control valve and a second sealing surface for installing an on-off valve assembly; the first sealing surface and the second sealing surface are disposed on different planes, and the first sealing surface is disposed on a side of the second sealing surface adjacent to the outer side of the wall along a thickness direction of the main body. The present disclosure provides the pre-embedded concealed waterway control box, an overall height of an on-off valve after an installation can be effectively reduced to achieve a shallower pre-embedded depth and a lower protruding height, so that the product is more beautiful.

The aforementioned embodiments are merely some embodiments of the present disclosure, and the scope of the disclosure is not limited thereto. Thus, it is intended that the present disclosure cover any modifications and variations of the presently presented embodiments provided they are made without departing from the appended claims and the specification of the present disclosure by those skilled in the art.

## Claims

1. A pre-embedded concealed waterway control box, **characterized in that**: it comprises a main body, a sealing ring and a housing; the housing is fixedly connected to a side of the main body facing an outer side of a wall by the sealing ring, and the main body, the sealing ring and the housing are disposed in a pre-embedded chamber on the wall;
the main body comprises a first sealing surface for installing a temperature control valve and a second sealing surface for installing an on-off valve assembly; the first sealing surface and the second sealing surface are disposed on different planes, and the first sealing surface is disposed on a side of the second sealing surface adjacent to the outer side of the wall along a thickness direction of the main body.

2. The pre-embedded concealed waterway control box according to claim 1, **characterized in that**: the first sealing surface is a side surface of the main body facing the outer side of the wall; a sinking platform is disposed on the side surface of the main body facing the outer side of the wall along the thickness direction of the main body, and the sinking platform defines the second sealing surface.

3. The pre-embedded concealed waterway control box according to claim 1 and/or 2, **characterized in that**: the main body comprises a mounting hole for the temperature control valve in the first sealing surface, and an outer side of the mounting hole of the temperature control valve comprises a first water outlet hole and a second water outlet hole along a radial direction to connect to a cold water inlet hole and a hot water inlet hole of the temperature control valve;
the first water outlet hole and the second water outlet hole are respectively in communication with a first water inlet passage and a second water inlet passage in the main body.

4. The pre-embedded concealed waterway control box according to claim 3, **characterized in that**: the first water outlet hole and the second water outlet hole are rotationally symmetrically arranged about a center of the mounting hole for the temperature control valve;
when water pipes in the wall are hot on a left side and cold on a right side, the first water inlet passage is connected to a cold water inlet pipe, the first water outlet hole is connected to the cold water inlet hole of the temperature control valve, the second water inlet passage is connected to a hot water inlet pipe, the second water outlet hole is connected to the hot water inlet hole of the temperature control valve;
when the water pipes in the wall are cold on the left side and hot on the right side, the first water inlet passage is connected to the hot water inlet pipe, the first water outlet hole is connected to the hot water inlet hole of the temperature control valve, the second water inlet passage is connected to the cold water inlet pipe, and the second water outlet hole is connected to the cold water inlet hole of the temperature control valve.

5. The pre-embedded concealed waterway control box according to claim 3 and/or 4, **characterized in that**: the temperature control valve comprises a mixed water outlet, the cold water inlet hole and the hot water inlet hole; the temperature control valve comprises the mixed water outlet partially disposed in the mounting hole for the temperature control valve and is hermetically sealed to a side wall of the mounting hole for the temperature control valve by a sealing ring on the side wall;
the cold water inlet hole and the hot water inlet hole are rotationally symmetrically arranged about an axial direction of the mixed water outlet; the mounting hole for the temperature control valve comprises a mixed water passage in communication with the mixed water outlet; and the sinking platform comprises a mixed water inlet in communication with the mixed water passage.

6. The pre-embedded concealed waterway control box according to claim 5, **characterized in that**: the on-off valve assembly comprises at least one on-off valve;
when there are at least two on-off valves, the at least two on-off valves are connected in series by an interconnecting cavity, and the interconnecting cavity is in communication with the mixed water outlet; and water outlets of the on-off valves each are respectively in communication with various water outlet joints.

7. The pre-embedded concealed waterway control box according to claim 6, **characterized in that**: the on-off valves are push on-off valves, and the on-off valves are disposed along a depth direction of the pre-embedded chamber.

8. The pre-embedded concealed waterway control box according to claim 6 and/or 7, **characterized in that**: the main body comprises a mounting hole for the on-off valves corresponding to the on-off valves, and the sinking platform is disposed in the mounting hole for the on-off valves.

9. The pre-embedded concealed waterway control box according to any one or more of claims 6 to 8, **characterized in that**: the main body comprises the water outlet joints corresponding to the on-off valves one-to-one.

10. The pre-embedded concealed waterway control box according to any one or more of claims 1 to 9, **characterized in that**: the housing extends outward to define a blocking edge along the depth direction of the pre-embedded chamber; and the blocking edge is used to guide residual water in the housing to the outer side of the wall.
